(19) Europäisches Patentamt

European Patent Office

Office européen des brevets

(11) EP 1 164 758 A2

(12) EUROPEAN PATENT APPLICATION

(43) Date of publication:
19.12.2001 Bulletin 2001/51

(51) Int Cl.$^7$: H04L 25/14, H04L 27/26

(21) Application number: 01305115.6

(22) Date of filing: 12.06.2001

(84) Designated Contracting States:
AT BE CH CY DE DK ES FI FR GB GR IE IT LI LU MC NL PT SE TR
Designated Extension States:
AL LT LV MK RO SI

(30) Priority: 12.06.2000 US 210931
08.06.2001 US 878140

(71) Applicant: Centillium Communications, Inc.
Fremont, Ca 94538 (US)

(72) Inventor: Rashid-Farrokhi, Farrokh
Pleasanton, California 94588 (US)

(74) Representative:
McLeish, Nicholas Alistair Maxwell et al
Boult Wade Tennant Verulam Gardens 70 Gray's Inn Road
London WC1X 8BT (GB)

(54) **Cancellation of interference in DSL systems which have multiple inputs and multiple outputs**

(57) Techniques are described for reducing the effect of crosstalk in multiple input multiple output (MIMO) DSL communications system, having a transmitter processor with N transmitters coupled to a receiver processor having L receivers. A number of signals are received by each receiver, including the intended signal and a number of interference signals. Each of the signals received by a receiver is weighted with a weight to produce a number of weighted signals. One or more of the weighted signals are combined to produce one or more estimated transmitted signals. The effect of each interference signal can effectively be eliminated.

FIG. 2

**Description**

FIELD OF THE INVENTION

This invention relates to communication systems, and more particularly, to digital subscriber line communication systems having multiple parallel transmissions under a crosstalk environment.

BACKGROUND OF THE INVENTION

A conventional telephone transmission line is typically comprised of a pair of copper conductors that connect a telephone set to the nearest central office, digital loop carrier equipment, remote switching unit or any other equipment serving as the extension of the services provided by the central office. This pair of copper conductors, which is also referred to as a twisted pair, has its leads named as tip and ring. The tip and ring nomenclature is derived from the electrical contacts of an old-style telephone plug. A number of such twisted pairs are generally bundled together within the same cable binder group.

The demand for high bandwidth data transmission over such telephone transmission lines has led to the development of digital subscriber line (DSL) technology. Several variations of DSL technology (referred to generically as xDSL) are evolving, such as SHDSL (symmetric high-bit-rate DSL), HDSL2 (second-generation high-bit-rate DSL), RADSL (rate adaptive DSL), VDSL (very high-bit-rate DSL), and ADSL (asymmetric DSL). In general, a digital subscriber line is comprised of two DSL modems coupled to one another by a twisted pair. The transmit (Tx) and receive (Rx) signals of DSL communications are carried by the twisted pair.

DSL communication can be based on multiple independent systems, each having a single transmitter coupled to a single receiver (e.g., by a twisted pair). Crosstalk between different parallel data streams in twisted pairs bundled together in the same cable binder may limit the capacity of such a system. Generally, crosstalk interference belongs to one of two groups: near end crosstalk (NEXT) and far end crosstalk (FEXT). NEXT is the crosstalk caused by signals in adjacent lines transmitted from the same end of the transmission line, while FEXT is the crosstalk caused by signals in adjacent lines transmitted from. the remote end of the transmission line. NEXT is typically much stronger than FEXT. In contrast to multiple independent systems, multiple-input, multiple-output (MIMO) systems can achieve improved capacity despite crosstalk among different parallel data streams in the system. However, the crosstalk between various twisted pairs bundled together in the same cable binder group remains a major contributor to communication channel impairment.

In more detail, each discrete data value communicated between a DSL transmitter and a DSL receiver may be represented by a point in a signal constellation. To transmit data represented by a point, X and Y grid coordinates of that constellation point are modulated. The digital result is then converted to an analog voltage for transmission. Typically, a series of such constellation points are consecutively transmitted such that the analog voltage appears as an analog waveform of varying amplitude. During transmission of the analog signal, the shape and amplitude of that signal may be altered by extraneous forces, such as noise and crosstalk interference. As such, the received analog signal includes both the original signal, as well as signals due to the likes of noise and crosstalk.

At the receiver end, the analog voltage is converted back to its digital equivalent and demodulated to obtain the transmitted X and Y grid coordinates (as modified, for example, by noise and crosstalk). These X and Y grid coordinates can be mapped to the constellation points. The data represented by the constellation point can then be obtained. However, when received coordinates map to an improper point of the transmitted signal constellation (e.g., due to crosstalk interference), the corresponding received signal constellation point may be detected incorrectly. As such, reducing the effect of crosstalk interference in a MIMO DSL system may be necessary to ensure robust and accurate communications.

There is a need, therefore, for a MIMO communication system that reduces the effect of crosstalk.

SUMMARY OF THE INVENTION

The disadvantages associated with the prior art are over come by embodiments of the present invention directed to a method, apparatus and system for processing DSL signals in a MIMO system subject to crosstalk so as to obtain the most performance and capacity that can be achieved with multiple parallel transmission lines with no crosstalk. In accordance with the principles of the invention, the signals transmitted from the various transmitters are processed at the receiver so as to improve the ability of the receiver to extract them from the received signal without losing performance due to crosstalk. In order to achieve this performance, the variously weighted versions of the received signal from parallel lines are combined to produce combined weighted signals, one for each parallel-transmitted data stream.

One embodiment of the present invention provides a technique for reducing the effect of crosstalk in a DSL communications system having a parallel transmitter processor including N transmitters coupled to a parallel receiver processor including N receivers, where N is an integer greater than or equal to 1. N received signals are received at the N .receivers. Each of the received signals is weighted with N weights, one weight for each of the N transmitters, to produce N weighted signals per received signal. The weighted signals are combined to produce one or more estimated transmitted signals for one or more of the transmitters. A training sequence may be added to one or more transmitted signals sent by a transmitter and an optimum combining weight may be calculated by minimizing a mean square error between the training sequence and the estimated transmitted signal.

Interference between the transmitted signals may be cancelled successively by calculating a first estimated transmitted signal corresponding to a strongest received signal. A first interference signal may be generated from the first estimated transmit substream. The interference signal may then be subtracted from one or more of the received signals and the process repeated successively to cancel the interference from the remaining received signals. Alternatively, a channel response may be estimated for a transmission medium that carries the signals between the transmitters and the receivers, The channel response may be fed to the parallel transmitter processor to calculate an optimal transmit vector to minimize interference between the transmitters and receivers. The transmitted signals may be weighted by the optimal transmit vector.

BRIEF DESCRIPTION OF THE DRAWINGS

FIG. 1 is a block diagram of DSL system in accordance with one embodiment of the present invention;

FIG. 2 is a block diagram of a receiver in accordance with one embodiment of the present invention;

FIG. 3 is a flow diagram illustrating a method for receiving multiple signals in accordance with one embodiment of the present invention;

FIG. 4 is a block diagram of a successive interference canceller in accordance with one embodiment of the present invention;

FIG 5 is a flow diagram illustrating a method for performing successive interference cancellation in accordance with one embodiment of the present invention;

FIG. 6 illustrates a block diagram of a receiver employing a combined interference canceller and equalizer in accordance with one embodiment of the present invention;

FIG. 7 is a block diagram of a receiver equalizer in accordance with one embodiment of the present invention;

FIG. 8 is a block diagram of a receiver equalizer for use in accordance with another embodiment of the present invention;

FIG. 9 is a block diagram of a transmitter in accordance with one embodiment of the present invention;

Fig. 10 is a block diagram of a DSL system in accordance with one embodiment of the present invention; and

FIG. 11 is a flow diagram illustrating a method for performing transmitter interference cancellation in accordance with one embodiment of the present invention.

DETAILED DESCRIPTION OF THE INVENTION

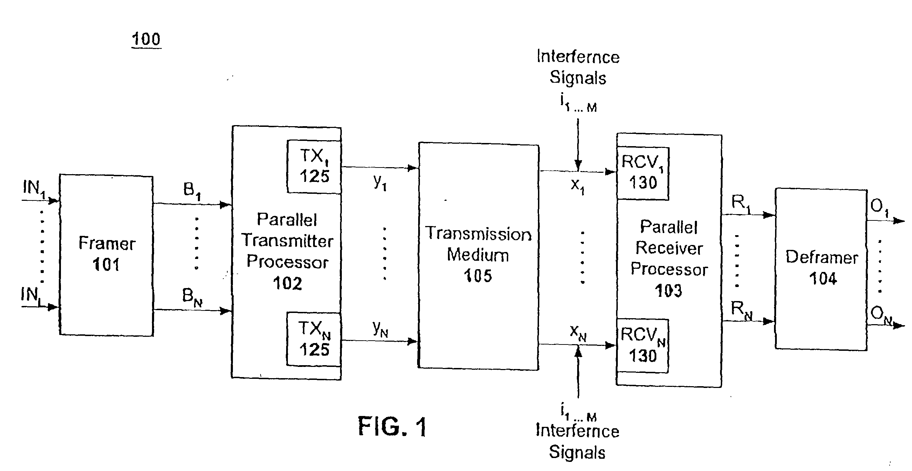

FIG. 1 is a block diagram of DSL system 100 in accordance with one embodiment of the present invention. The system 100 generally includes a framer 101, a parallel transmitter processor 102, a parallel receiver processor 103 and a deframer 104. All of these elements may be implemented in hardware, software, firmware or some combination of these. By way of example and without loss of generality, the framer 101 and parallel transmitter processor 102 may be implemented as one or more application specific integrated circuits (ASICs). Likewise, the parallel receiver processor 103 and the deframer 104 may be implemented as one or more ASICs. Alternatively, these components may be implemented as instructions executing on a number of digital signal processors (DSP).

General Overview

The system 100 may be a DSL MIMO system subject to crosstalk. The framer 101 and parallel transmitter processor 102 may be included in a first location (e.g., a central office), and the parallel receiver processor 103 and the frarner 104 may be included in a second location (e.g., customer's premises). The parallel transmitter processor 102 of the first location is operatively coupled to the parallel receiver processor 103 of the second location via transmission medium 105. The transmission medium 105 may be, for example, any suitable transmission capable of at least N parallel transmissions. For instance, the transmission medium 105 may be a conventional copper telephone transmission line having N or more twisted pairs insulated by plastic or pulp. Alternatively, the transmission medium 105 may be one or more optical fibers or coaxial cables.

The system operates to reduce crosstalk so as to obtain the improved performance and capacity. Each of the transmitted data signals is received by a number of receivers. Each signal received by a particular receiver is assigned a weight. These weighted versions of each signal are combined to produce a combined weighted signal. This combined weighted signal is essentially an estimated transmit waveform. As such, there is one estimated transmit waveform for each transmitted data signal. Bach estimated transmit waveform may then be subjected to signal processing to correct for the effect of crosstalk. Each processed estimated transmit waveform may then be converted into a bitstream. Note that the techniques described herein can be employed to provide both forward and reverse communication links.

Components

The framer 101, which is part of a transport convergence layer, acts as an interface between a DSL modem and the outside world. The framer 101 receives a set of L input data streams $IN_1...IN_L$, and routes input bits from those input data streams to N output bitstreams $B_1...B_N$. Note that the number of input data streams L may be different from the number of output bitstreams N. For example, the framer 101 may multiplex (or demultiplex) selected subsets of bits from the L input data streams $IN_1...IN_L$ to form the N output bitstreams $B_1...B_N$. The framer 101 may also insert a unique training sequence into each output data stream to produce the output bitstreams $B_1...B_N$. The location of the training sequence is known by the corresponding receiver to facilitate decoding of the transmitted bitstreams. In addition, the framer 101 may add error correction bits to each of the output bitstreams $B_1...B_N$. Note that the source of the input data streams $IN_1...IN_L$ may be, for example, a media access control layer or some other layer in a nerwork of which the system 100 is a part (e.g., T1, pulse code modulation, Ethernet, asynchronous transfer mode, or the like). The framer 101 is coupled to the parallel transmitter processor 102.

The parallel transmitter processor 102 includes N parallel transmitters (TX) 125. The parallel transmitter processor 102 converts each of the output bitstreams $B_1...B_N$ into signals $y_1...y_N$. The corresponding transmitters transmit the signals $y_1...y_N$ in parallel over transmission medium 105. Note that the type of signals $y_1...y_N$ produced by parallel transmitter processor 102 may be influenced by the nature of the transmission medium 105. For example, in the case where transmission medium 105 is a conventional copper telephone transmission line, the output bitstreams $B_1...B_N$ can be converted to analog waveforms. Conventional modulation schemes and signal processing techniques can be employed by the parallel transmitter processor 102 to produce signals $y_1...y_N$. Alternatively, in the case where the transmission medium 105 is a conventional fiber optic transmission line, the parallel transmitter processor 102 may produce signals $y_1...y_N$ in the form of one or more digital waveforms. In general, the parallel transmitter processor 102 may perform any coding or other processing on output bitstreams $B_1...B_N$ to facilitate their transmission (as signals $y_1...y_N$) over the transmission medium 105.

The parallel receiver processor 103 includes a number of parallel receivers (RCV) 130. Note that the number of parallel receivers 130 included in parallel receiver processor 103 is greater than or equal to N. The parallel receiver processor 103 has a receiver 130 for each transmitter 125 of the parallel transmitter processor 125 thereby forming N transmitter-receiver pairs. Any additional receivers (assuming the number of receivers 130 is greater than N) may, for example, form transmitter-receiver pairs with transmitters from parallel transmitter processors 102 at other locations. For each of the N transmitter-receiver pairs, the transmitter is coupled to the receiver, for example, via a twisted pair or optical fiber. During transmission of the signals $y_1...y_N$, they are typically affected by the channel response associated with the transmission medium 105. Generally, the channel response subjects the transmitted signals $y_1...y_N$ to frequency distortion. As such, each receiver 130 receives a corresponding signal $x_1...x_N$ (e.g., RCV 1 receives $x_1$, RCV 8 receives $x_8$, and RCV N receives $x_N$), where each received signal x is the frequency distorted version of the corresponding transmitted signal y.

In addition, note that die each of the received signals x include the original transmitted signal y plus one or more interference signals $i_1...i_M$. Thus, each receiver 130 receives a waveform including a distorted version of the intended signal (e.g., RCV 1 receives $x_1$) and a number of interference signals (e.g., RCV 1 also receives $i_1$, $i_3$, $i_8$, and $i_{11}$). The interference signals $i_1...i_M$ may include crosstalk from adjacent twisted pairs. For example, signal $y_1$ may manifest on signals $x_2$, $x_4$ and $x_8$ in the form of crosstalk signals (assuming the corresponding twisted pairs are adjacent). In addition, the interference signals $i_1... i_M$ may include crosstalk from other sources. For example, a waveform transmitted over a twisted pair included in a separate cable binder that is received by a receiver (additional to receivers 1 through N) may manifest in a number of received signals $x_1...x_N$. In short, the interference signals may include crosstalk from one or more sources that have strong coupling to the transmission medium 105. Interference signals $i_1...i_M$ may further include noise (e.g., additive white gaussian noise or non-stationary noise).

Generally, the parallel receiver processor 103 processes the received data of all N receivers in parallel to detect the original transmitted signals $y_1...y_N$. More specifically, the parallel receiver processor 103 assigns a weight vector to each of the transmitted signals included in the waveform received by each receiver 130. Thus, at the receiver there is a weight vector for each of the transmitted signals $y_1...y_N$. As such, a number of weighted signals are associated with each receiver 130. The weighted signals are then combined together to produce an estimated transmit waveform. Thus, there is an estimated transmit waveform for each transmitted signal $y_1...y_N$. The parallel receiver processor 103 may perform additional signal processing on each estimated transmit waveform to correct for the effect of crosstalk. The parallel receiver processor 103 then converts each estimated transmit waveform into received bitstreams $R_1...R_N$.

The parallel receiver processor 103 is coupled to a deframer 104. Generally, the deframer 104 provides a complementary function to framer 101, More specifically, the deframer 104 may demultiplex (or multiplex) the N received bitstreams $R_1...R_N$ into N output bitstreams $O_1...O_N$. The deframer 104 may optionally perform decoding across different received bitstreams $R_1...R_N$. For example, deframer 104 may perform error correction decoding that corrects for errors due to channel impairment (e.g. background noise after input data streams have been converted to bit streams).

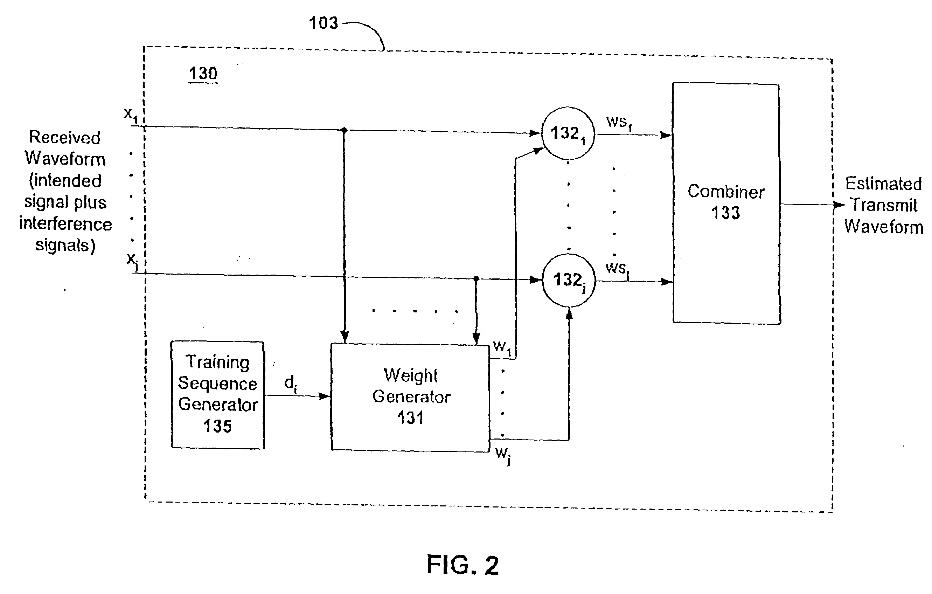

FIG. 2 depicts a block diagram of a parallel receiver processor in accordance with one embodiment of the present invention. The parallel receiver processor 103 contains a number N of receivers 130. For the sake of clarity, only one receiver 130 is depicted in FIG. 2. Each receiver 130 generally includes a weight generator 131, multipliers 132, a combiner 133, and a training sequence generator 135. Alternative embodiments of parallel receiver processor 103, however, may employ different configurations. For example, the functionality of the deframer 104 and the parallel receiver processor 103 may be integrated into a single module or chip set. Generally, the components of the parallel receiver processor 103 may be implemented in hardware, software, firmware or some combination of these. By way of example and without loss of generality, the combiner 133, weight generator 131, multipliers 132 and training sequence generator 135 may be implemented as one or more ASICs. Alternatively, more or more of these components may be implemented as a series of instructions operating on a DSP.

Receiver Component of Parallel Receiver Processor

Receiver 130 receives a waveform. The received waveform includes j signals, which include the intended signal and a number of interference signals. Each of the signals included in the received waveform may also be distorted by the communication channel as previously explained. Note that j can be a subset of the total parallel transmitted signals N (e.g., as shown in Figure 1). Alternatively, j can be equal to N. The weight generator 131 generates a weight w for each of the signals included in the received waveform (e.g., $x_1...x_j$). The weight $w_j$ corresponds to the $j^{th}$ signal included in the waveform. The $j^{th}$ signal, for example, may be the intended signal x for that receiver 130, or one of the interference signals associated with that signal x. For example, assume that the third receiver 130 ($RCV_3$) included in a group of N parallel receivers receives a waveform including four signals (in other words, j equals four): the intended signal and three interference signals. In this case, weight generator 131 of $RCV_3$ generates weights $w_1$, $w_2$, $w_3$, and $w_4$, which correspond to the intended signal and the interference signals included in the received waveform. Note that some interference signals may correspond to adjacent transmitted signals included in the group of N parallel transmissions, while other interference signals may correspond to an external source of interference (e.g., adjacent cable binder or a transmitted waveform from another set of parallel transmitters). Further note that the number of interference signals manifesting in any one received waveform depends on a number of factors such as the quality of insulation and allocated bandwidth associated with the communication link.

In one embodiment, if the received interference signals are analog signals, the corresponding weights may be analog signals. Alternatively, if the received interference signals are digital signals, the corresponding weights may be digital signals (e.g., binary sequences). Regardless of the form of the assigned weights, a set of weights is computed for each of the transmitted signals in a parallel transmission group. This set of weights may be regarded as the components of a weight vector. Generally, there is one weight vector for each transmitter-receiver pair. Similarly, the set of signals included in the waveform received by any one receiver 130 may be regarded as the components of a received waveform vector.

Each of the received signals included in the received waveform is combined with the weights $w_1 ... w_j$ by the multipliers 132 thereby producing j weighted signals $ws_1... ws_j$ for the received waveform. The combiner 133 combines (e.g. adds) weighted signals $ws_1... ws_j$ thereby producing an estimated transmit waveform. Note that there is an estimated transmit waveform for each transmitter-receiver pair (e.g., 1 through N).

The training sequence generator 135 may add a training sequence ($d_j$) in the case where a particular signal does not have one. There is a different training sequence for each transmitted waveform. The training sequence may be in the form of a random sequence of numbers that is known to both the parallel transmitter processor 102 and the parallel receiver processor 103. For example, the training sequence generator 135 may be configured to transmit an exact copy of each training sequence to the transmitter processor 102 to ensure proper synchronization between the parallel transmitter processor 102 and the parallel receiver processor 103. The training sequence generator 135 may require just a signature from the parallel transmitter processor 102 to regenerate the training sequence. The signature can be a binary word input to parallel transmitter processor 102. The signature could be transmitted during a handshake process that establishes communication between the corresponding transmitter-receiver pair. Alternatively, the entire training sequence may be generated by a training sequence generator located in the parallel transmitter processor 102 and transmitted to the parallel receiver processor 103. In either case, the weight generator 131 may use the training sequence to calculate the weights $w_1...w_j$. There arc several methods of generating the weights $w_1...w_j$, which will be discussed in turn.

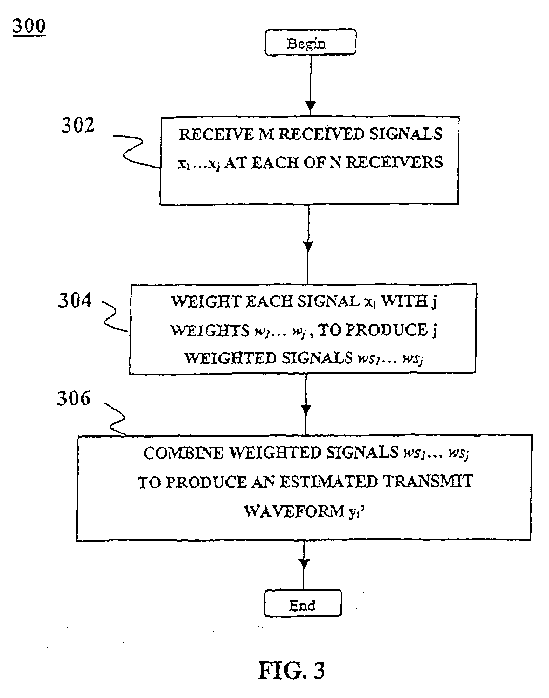

The operation of the receiver 130 is best understood by referring simultaneously to FIG. 2 and the flow diagram 300 of FIG. 3. At step 302, the receiver 130 receives the waveform carrying each of the j received signals $x_1...x_j$. The received signals $x_1...x_j$ are coupled to the weight generator 131 and the combiner 133 by way of multipliers 132. At step 304 the weight generator 131 generates a weight $w_j$ for each of the received signals x. At step 306, multipliers $132_1...132_j$ multiply the received signals $x_1...x_j$ by the corresponding weights $w_1...w_j$, to produce j weighted signals $ws_1...ws_j$. The combiner 133 combines (e.g. adds) the weighted signals $ws_1... ws_j$ to produce an estimated transmit waveform $y_i'$ for the $i^{th}$ transmitter-receiver pair.

There are several methods of generating the weights $w_1...w_j$. In one embodiment of a method for generating such weights, the transmitter spatial processor 102 does not perform any processing on the output bitstreams $B_1...B_N$ prior to transmission of the transmitted signals $y_1...y_N$ to the transmission medium 105. By way of example, the training sequence generator 135 may add a training sequence denoted by $d_i$ for each transmitter in case the transmitted data stream does not have one. There is a different training sequence $d_i$ for each transmitted signal $y_i$. The previous discussion regarding training sequence generator 135 equally applies here. The weight generator 131 may use the training sequence $d_i$ to calculate the weights $w_1...w_j$. For example, the weight generator 131 may calculate an optimum combining weight vector $w_{i,opt}$ by minimizing the mean square error (MMSE) between the training sequence $d_i$, and the combiner output:

$$w_{i,opt} = \arg\min\{E(|d_i - w_i^H X|^2)\}$$

(1)

$$= \Phi^{-1} p_i = E\{XX^H\}E\{Xd_i^H\}$$

where X is a jx1 received signal vector corresponding to the set of received signals $x_1...x_j$ received by the receiver 130. The vector $w_i$ is an jx1 weight vector corresponding to the set of weights $w_1...w_j$. The superscript H denotes the conjugate transpose of a vector. The optimum combining weight vector is denoted by $w_{i,opt}$ and $d_i$ is the training sequence corresponding to the $i^{th}$ transmitter. The operation argmin{} returns the value of w that minimizes the quantity in {}. The covariance matrix of the received signal vector X is $\Phi$ and the cross covariance matrix of the received signal vector X and training sequence $d_i$ is denoted by $p_i$. The operation E{} returns the expectation value of the quantity within the braces. The optimum combining weight vector $w_{i,opt}$ may alternatively be calculated by other methods, including but not limited to, Recursive Least Square (RLS), QR decomposition-based RLS (QRD-RLS), or Least Mean Square (LMS).

At step 306, the combiner 133 combines the received vector X with the optimal weight vector $w_i^{opt}$ to produce an output;

$$y_i' = w_{i,opt}^H X$$

(2)

where $y_i'$ is an estimated transmit waveform corresponding to the transmitted signal $y_i$ from the $i^{th}$ transmitter. The output of the combiner 133 may then undergo additional signal processing, such as slicing, decoded and demapping to produce the corresponding received bitstream $R_i$. In one embodiment of the invention, the estimated transmit waveform $y_i'$ from each combiner 133 may be sliced, decoded and demapped in parallel to produce the set of received bitstreams $R_1...R_N$.

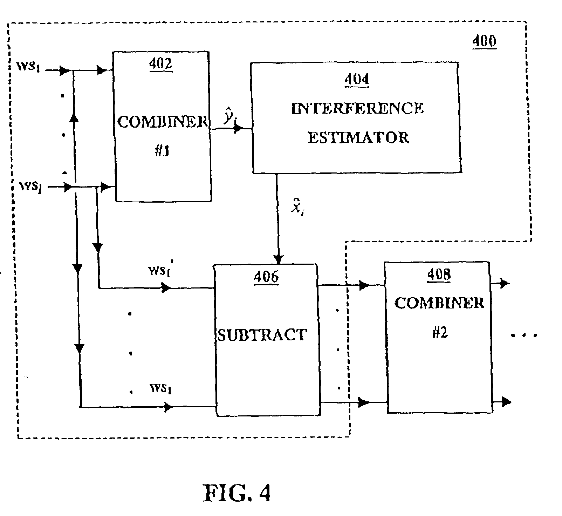

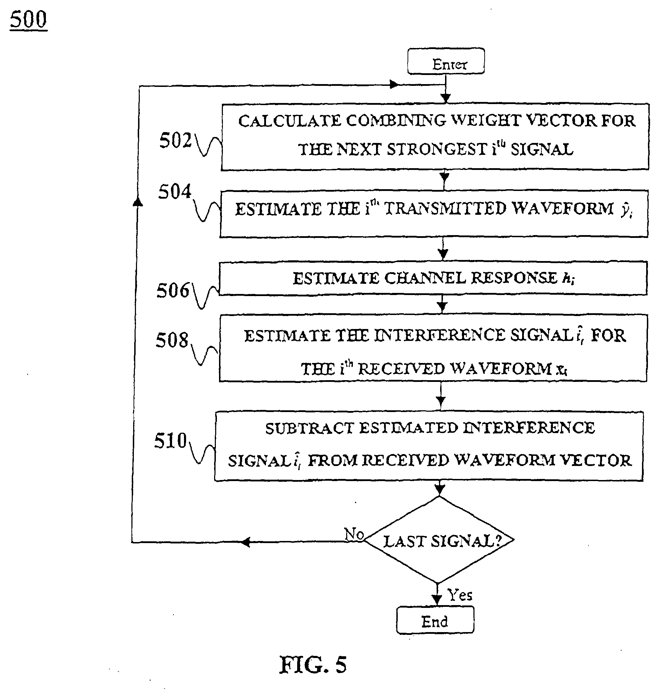

In a different embodiment of the invention, an apparatus of the type shown in FIG. 2 includes a combiner that implements a successive interference cancellation, to remove interference successively. This embodiment is best understood by referring simultaneously to the block diagram of the interference cancellation apparatus 400 depicted in FIG. 4 and the interference cancellation flow diagram 500 of the method depicted in FIG. 5. Referring to FIG. 4, the apparatus 400 may be regarded as a particular example of the receiver 130 of FIG. 2, The apparatus 400 generally comprises a first combiner 402, an interference estimator 404, a subtractor 406 and a second combiner 408. All of these elements may be implemented in hardware, software, firmware or some combination of these. By way of example and without loss of generality, the first and second combiners 402, 408, the interference estimator 404, and the subtractor 406 may be implemented as one or more ASIC's. Alternatively, these components may be implemented as a series of instructions operating on a DSP.

The first combiner 402 may operate as an adder. Specifically, the first combiner 402 may receive j weighted signals $ws_1...ws_j$ generated for received signals $x_1...x_j$ (as described above with respect to FIG. 2 and FIG. 3). The first combiner 402 may then sum the j weighted signals $ws_1...ws_j$ to produce an estimated transmit waveform $y_i'$. In particular, referring to FIG. 5, at step 502 a combining weight vector is calculated first for the strongest received signal (included in the received waveform) as described above. By way of example, the strongest received signal may be the one having the largest signal to noise ratio (SNR). Alternatively, the strongest received signal may be determined based on some other characteristic, such as the average power of the signal. A digital representation of the transmit waveform, denoted by $\hat{y}_i$, is estimated by the combiner 402 at step 504. The estimation of the $i^{th}$ transmitted signal, may be given by:

$$\hat{y}_i = f(y_i) \tag{3}$$

where, by way of example, f(.) denotes a slicing, decoding, and demapping operation implemented by the first combiner 402. Note that the result of a slicing/demapping operation is a constellation point. Decoding simply reverses the effect of any coding operation performed on the original transmitted signal $y_i$.

The interference estimator 404 estimates the interference effect of the strongest received signal $x_i$ on the received waveform. The effect of this interference is removed from the received waveform by the subtractor 406. For example, at step 508, an interference signal $\hat{i}_i$ corresponding to the strongest received signal $x_i$ is estimated. The interference signal $\hat{i}_i$ may be estimated by convolving the estimated transmitted signal $\hat{y}_i$ with a channel response vector $h_i$.

$$\hat{i}_i = \hat{y}_i * h_i \tag{4}$$

The channel response vector $h_i$ can be estimated at step 506 by any suitable methods, for example but not limited to, the Least Square method. At step 510 the subtractor 406 may then subtract the estimated interference signal $\hat{i}_i$ from the received signal vector X to produce a corrected received signal vector X':

$$X' = X - \hat{i}_i = X - \hat{y}_i * h_i \tag{5}$$

where the convolution operation is denoted by *. The corrected received signal vector X' may then be fed, for example, to a second combiner 408 and the procedure of steps 502 through 510 may be then repeated until all received signals $x_1...x_N$ except the desired signal are detected and their interferences are removed. The successive interference cancellation may be performed by a series apparatus of the type shown in FIG. 4.

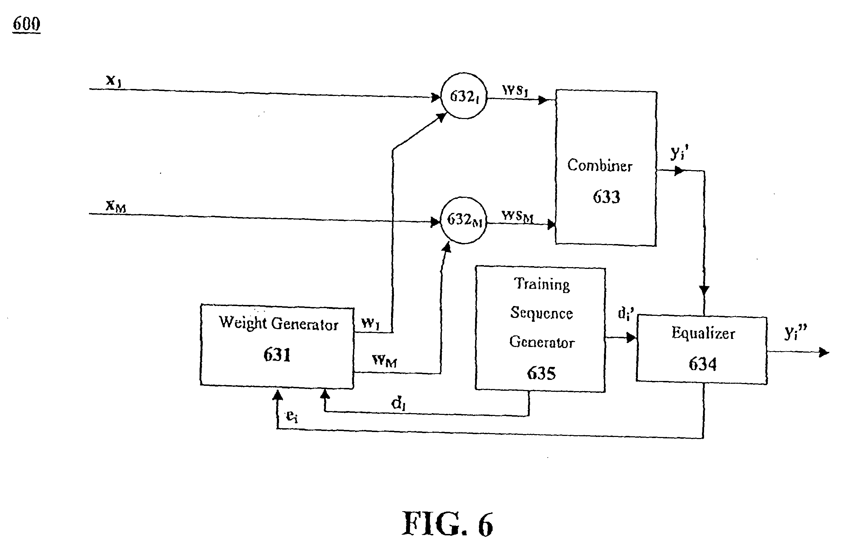

In accordance with another embodiment of the present invention, a receiver may have an equalizer coupled between a combiner and a weight generator. A simplified block diagram of such a receiver 600 is depicted in FIG. 6. The receiver 600 generally includes a weight generator 631, a set of multipliers $622_1...632_M$, a combiner 633, an equalizer 634, and a training sequence generator 635. The weight generator 631, combiner 633, equalizer 634, and training sequence generator 635 may be implemented in hardware, software, firmware or some combination of these (e.g., as one or more application specific integrated circuits). The multipliers $632_1...632_M$ and the combiner 633 may be configured in a substantially similar manner as described above with respect to FIG. 2. The multipliers $632_1...632_M$ multiply the received signals $x_1...x_M$ by weights $w_1...w_M$ assigned by the weight generator 631 to form weighted signals $ws_1...ws_M$. The combiner 633 combines the weighted signals $ws_1...ws_M$ to produce an estimated waveform $y_i$.

The equalizer 634 is coupled to an output of the combiner 633 and an input of the weight generator 631 in a feedback loop. The equalizer 634 reverses the effects of the transmission medium 105 on the transmitted signals and generates an error signal $e_i$. For example, the transmission medium 105 may distort the transmitted signals $y_i$ by attenuating a high frequency portion of the signal more than a low frequency portion. The equalizer may reverse this effect by amplifying the high frequency portion more than the low.

The weight generator 631 receives the error signal $e_i$, the received signals $x_1...x_M$ and a training sequence $d_i$. The training sequence $d_i$ may be generated by similar random sequence generators located in either or both of the transmitter processor 102 and the receiver processor 103. The receiver 600 may synchronize the random sequence generator by any suitable method. A copy of this training sequence, or a corresponding signature, may be sent to the $i^{th}$ transmitter to synchronize it with the receiver 600. Alternatively, the training sequence $d_i$ may be generated by a training sequence generator in the transmitter processor 102 and transmitted to the receiver processor 103. The weight generator 634 may then update the weight vector, e.g. as a difference between the training sequence $d_i$ and the error signal $e_i$ output by the equalizer 634. The equalizer 634 may be trained by a training sequence $d_i'$, which may be the same training sequence $d_i$ as that received by the weight generator 631 or a separate training generated by the training sequence generator 635 for the equalizer 634. Alternatively, the receiver 600 may contain a separate training sequence generator for the equalizer to generate the equalizer taining sequence $d_i'$. In this case the updated weight coefficients may be calculated by an MMSE approach:

$$w_{ieq,min} = \arg\min_{w}\{E(|d_i'-w_i^H X|^2)\}$$

$$e_i = \{E(|d_i'-w_{ieq,min}^H X|^2)\} \tag{6}$$

where X is a vector containing samples of the received signals $x_i$ taken at different time instants. The samples may be taken at different time instants of the received signals $x_i$, and saved in a delay tap line. An optimum equalizer combining vector is represented by $w_{ieq,min}$ and the conjugate transpose of the weight vector $w_i$ is represented by $w_i^H$. The optimum equalizer combining weight vector $w_{ieq,min}$ may alternatively be calculated by other methods, including but not limited to, Recursive Least Square (RLS), QR decomposition RLS (QRD-RLS), or Least Mean Square (LMS). The equalizer 634 may alternatively be trained in a blind mode without the need for training signals. Blind equalizer training methods include, but are not limited to, Constant Modulus Algorithm (CMA), Reduced Constellation Algorithm (RCA), or Multi Modulus Algorithm (MMA).

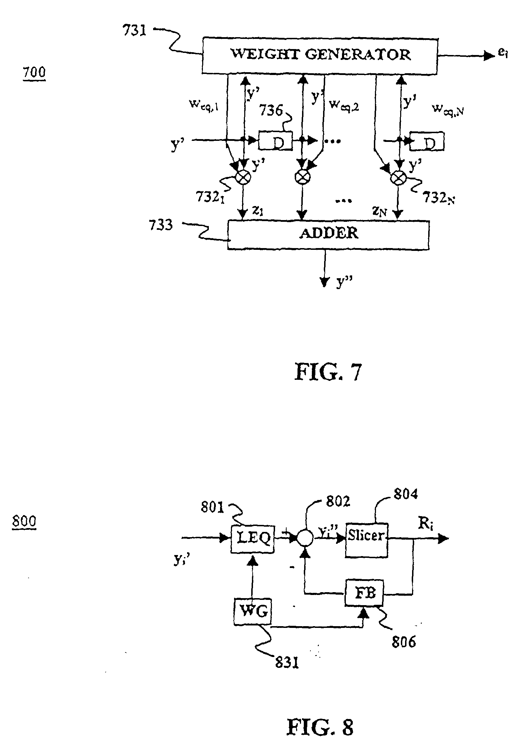

FIG. 7 shows a block diagram of a first possible implementation of the equalizer 634, generally referred to as a linear equalizer 700. The linear equalizer 700 includes an equalizer weight generator 731, one or more multipliers 732, an adder 733, and one or more delay elements 736 arranged in a delay tap line. The equalizer weight generator 731, multipliers 732, adder 736 and delay elements 736 may be implemented in hardware, software, firmware or some combination of these, e.g. as one or more application specific integrated circuits.

An estimated transmitted signal y', e.g., from the adder 733, may be coupled to the multipliers $732_1...732_N$ via delay elements (D) 736. The equalizer weight generator 731 receives the training sequence $d_i'$ and generates M equalizer weights $w_{eq,1}...w_{eq,M}$ as described above. The equalizer weights $w_{eq,1}...w_{eq,M}$ are coupled to the multipliers $732_1...732_M$. The equalizer weight generator 731 may also calculate the error signal $e_i$ as described in equation (6) above. Each multiplier $732_i$ multiplies a given equalizer weight $w_{eq,i}$ by the estimated transmit waveform y' to produce a weighted estimated transmitted signal $z_i$. The resulting set of weighted estimated transmitted signals $z_1...z_M$ are coupled to the adder 733, which adds them together to produce a corrected estimated transmitted signal y''.

Alternatively, the equalizer 634 may be implemented as a decision feedback equalizer (DFE). An example of a DFE equalizer 800 is shown in FIG. 8. The equalizer 800 generally comprises a linear equalizer (LEQ) 801, coupled via an adder 802 to a slicer 804 and a feedback (FB) element 806 and a weight generator 831 coupled to the linear equalizer 801 and the feedback element 806. The linear equalizer 801 and/or the feedback element 806 may be linear equalizers of the type described above with respect to Fig. 7. Any or all of the above components of the DFE equalizer 800 may implemented in hardware, software, firmware, or some combination of these, e.g., as one or more ASIC's. Alternatively, these components may be implemented as a series of instructions operating on a digital signal processor (DSP), The linear equalizer 801 calculates a combining weight vector and error signal as described above with respect to equation (6).

A combination of the weighted input from linear equalizer 801 and weighted estimated previous symbols are fed back to the slicer 804 input. The slicer 804 reconstructs the transmitted signal $y_i$ by associating the received signal $x_i$ with the closest constellation point. The slicer 804 produces a corrected estimated received data bit substream $R_i$. The weight generator 831 calculates weights for both the linear equalizer 801 and the feedback element 806. The weights may be calculated by MMSE or by other methods known to the art, including but not limited to, Recursive Least Square (RLS), QR decomposition RLS (QRD-RLS), or Least Mean Square (LMS). The weighted estimated transmitted signal waveforms are then added together by the adder 802 and coupled to the slicer.

In another embodiment of the invention, the forward channel transmitter develops the transmitted signals $y_1...$

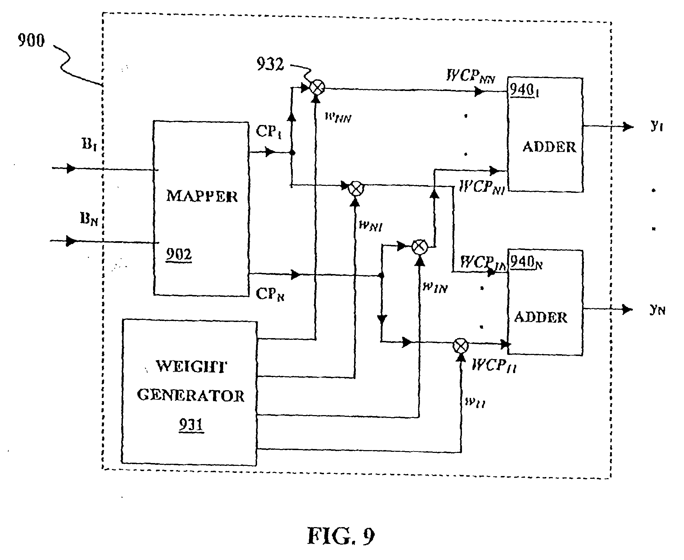

$y_N$ using the channel properties, which are made known to the spatial transmitter processor 102 of the forward link, to maximize the total capacity of the system. FIG. 9 shows the block diagram of an individual transmitter 900 of this system. The transmitter 900 generally includes a mapper 902, a weight generator 931, one or more multipliers 932 and one or more adders $940_1...940_N$. The mapper 902 receives data bit substreams $B_1...B_N$ e.g., from a framer, and converts the data bit substreams $B_1...B_N$ to a set of one or more constellation points $CP_1...CP_N$. By way of example, the multipliers 932 may be divided into N groups, each group containing N multipliers. The multipliers 932 in the $i^{th}$ group receive N weights $w_{i1}...w_{iN}$, from the weighf generator 931. Each group of multipliers 932 may receive a different set of weights for the corresponding constellation point. In a parallel fashion, the multipliers 932 in the $i^{th}$ group multiply the $i^{th}$ constellation point $CP_i$ by all of the weights $w_{i1}..,w_{iN}$ to produce a set of N weighted constellation points $WCP_{i1}...WCP_{iN}$. The $i^{th}$ combiner $940_i$ adds the weighted constellation points $WCP_{i1}...WCP_{iN}$ to obtain the $i^{th}$ transmitted signal $y_i$. The combiners $940_1...940_N$ may include digital to analog (D/A) converters to convert the weighted constellation points to the waveforms that carry the transmitted signals $y_1...y_N$.

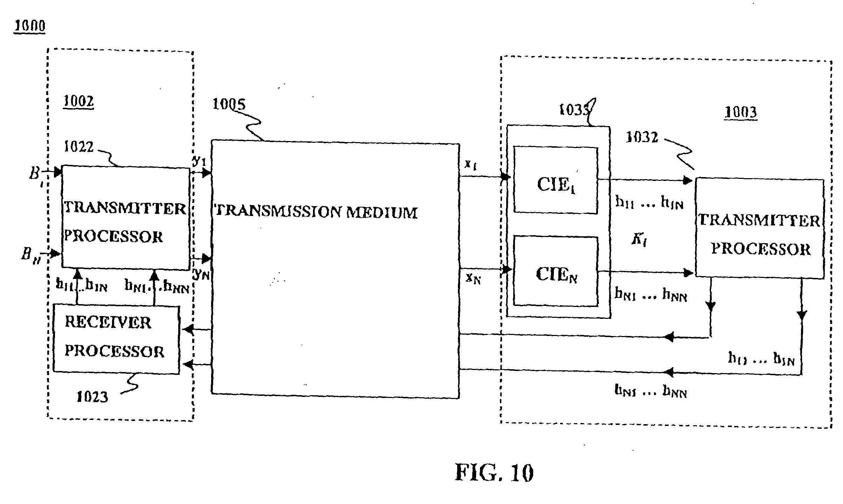

FIG. 10 depicts a block diagram of a DSL system 1000 that utilizes a transmitter of the type shown in FIG. 9. The system 1000 generally includes a first transceiver 1002 coupled to a second transceiver 1003 by a transmission medium 1005. The first and second transceivers 1002, 1003 respectively include transmitter processors 1022, 1032 and receiver processors 1023, 1033 The transmitter processors 1022 receives data bit substreams $B_1'...B_N'$, e.g. from a framer (not shown). The transmitter processors 1022 converts the bit substreams $B_1'...B_N'$ to waveforms that carry the transmitted signals $y_1...y_N$ in a manner similar to that described above with respect to FIG. 9. The transmission medium 1005 carries the waveforms with the transmitted signals $y_1...y_N$ to the second transceiver 1003 where they arrive as received signals $x_1...x_N$. The second transceiver 1003 includes a receiver processor 1013, which may be similar to that depicted in FIG. 2. Each of the received signals includes interference from one or more of the other M-1 signals and/or other outside sources of interference. The receiver processor 1013 may include channel interference estimators that estimate the effect of the interference, e.g. as described below. The optimal weight vectors may be determined based on minimizing the mean square error for each data stream.

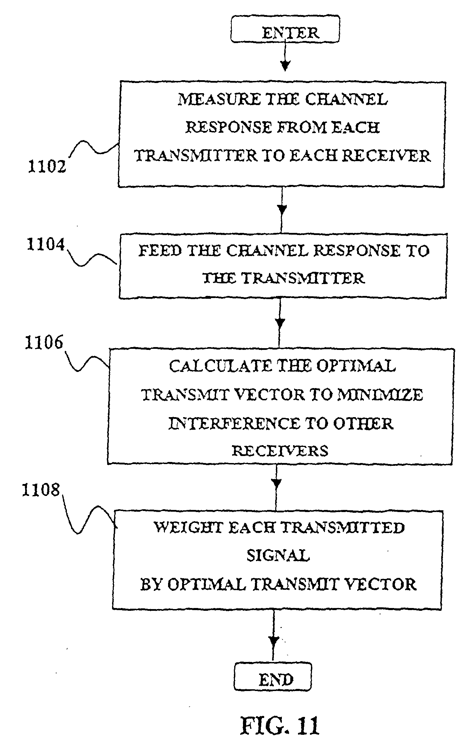

The operation of a DSL system according to this embodiment is best understood by simultaneously referring to the block diagrams of FIG. 9 and 10 and the flow diagram of FIG. 11. The optimal transmit weight vectors may be calculated as follows. At step 1102 the channel interference estimators $CIE_1...CIE_N$ within the receiver processor 1003 measure an interference covariance matrix $K_i$. The channel interference estimators $CIE_1...CIE_N$ also estimate a channel response matrix H for each transmitted signal $y_i$ in the transmit set. The elements $h_{ij}$ of the matrix H, refer to the interference between the transmitter of the $i^{th}$ transmitted signal $y_i$ and the receiver of the $j^{th}$ received signal $x_j$, where j = 1,...N.

The interference covariance matrix $K_i$ and channel response matrix H are supplied at step 1104 by the second transceiver 1003 to the first transceiver 1002 in each link, e.g., via the transmitter processor 1032. At step 1106 a set of weights $w_i = [w_{i1}...w_{iN}]$ are calculated, where i is an integer ranging from 1 to N. The set of weights $w_i$ may be regarded as a weight vector having the weights $w_{i1}...w_{iN}$ as components. The weights $w_{i1}...w_{iN}$ may be calculated by a weight generator located in the transmitter processor or, alternatively by a weight generator located in the receiver processor. At step 1108, the constellation points $CP_i$ are weighted by the weights $w_1 = [w_{i1}...w_{iN}]$ generated in step 1106 to produce the weighted constellation points $WCP_{i1}...WCP_{iN}$. The weighted constellation points $WCP_{i1}...WCP_{iN}$ are then added together to produce the $i^{th}$ transmitted signal $y_i$.

By way of example, the weights may be calculated in step 1106 as follows. First the matrix equation $H^H (K^N) H = U^H \Lambda^2 U$ is solved, where $H^H$ is the Hermitian transpose of the channel response matrix H and $K^N$ is the interference covariance matrix. U is a unitary matrix, each column of which is an eigenvector of $H^H (K^N) H$. A is a diagonal matrix defined as $\ddot{E} = diag(\ddot{e}_1,\cdots,\ddot{e}_N)$, where $\ddot{e}_1,\cdots,\ddot{e}_N$ are each eigenvalues of $H^H (K^N) H$ and diag indicates that the various $\lambda_i$ are arranged as the elements of the main diagonal of an $N \times N$ matrix. Transmit power for each transmitter is allocated by solving the simultaneous equations $Pk = (\tilde{o} - \frac{1}{\ddot{e}_k})^+$ and $\sum p_k = P$, where P is the total transmitted power; + is an operator that returns zero (0) when its argument is negative, and returns the argument itself when it is positive; and each $p_k$ is a representative of a power for each weight vector. A new matrix Φ is defined as $\ddot{O} = U^H diag(\ddot{e}_1,\cdots,\ddot{e}_N)U$. Each column of matrix Φ is used as a normalized (e.g., based on unit power) weight vector as indicated by $\Phi = [z_1,\cdots, z_N]$. The weight vector $w_i = [w_{i1},\cdots, w_{iN}] = diag(\ddot{e}_1,\cdots, \ddot{e}_N)\ddot{O}$ is then determined by unnormalizing, based on the power to be assigned to the weight vector, the various weights therein, being

$$w_{ij} = \sqrt{\tilde{\varepsilon}_i}\, z_{ij},$$

where i and j are integers ranging from 1 to N.

While the above is a complete description of the preferred embodiment of the present invention, it is possible to use various alternatives, modifications and equivalents. Therefore, the scope of the present invention should be determined not with reference to the above description but should, instead, be determined with reference to the appended claims, along with their full scope of equivalents.

**Claims**

1.  A method for reducing the effect of crosstalk in a MIMO DSL communications system, the system comprising a transmitter processor including N transmitters coupled to a receiver processor including N receivers, where N is an integer greater than or equal to 1, the method comprising:

    receiving a number of signals;
    weighting each of the received signals with a weight thereby producing a number of weighted signals; and
    combining one or more of the weighted signals to produce one or more estimated transmitted signals.

2.  The method of claim 1, further comprising:

    prior to receiving the number of signals, creating from one or more data bit streams, N transmitted signals; and
    transmitting the N transmitted signals from the N transmitters to the N receivers.

3.  The method of claim 1 further comprising:
    estimating one or more interference signals from the one or more estimated transmitted signals.

4.  The method of claim 3 further comprising:
    subtracting one or more of the interference signals from one or more of the N received signals.

5.  The method of claim 2, wherein the step of transmitting the N transmitted signals includes adding a training sequence to one or more of the transmitted signals.

6.  The method of claim 5 further including calculating an optimum combining by minimizing a mean square error between the training sequence and the estimated transmitted signal.

7.  The method of claim 1 wherein the step of combining one or more of the weighted signals includes:

    calculating a first estimated transmitted signal corresponding to a strongest received signal; and
    estimating from the first transmitted signal a first interference signal.

8.  The method of claim 7, further comprising:
    subtracting the interference signal from one or more of the received signals.

9.  The method of claim 7, further comprising:

    calculating a next estimated transmitted signal corresponding to a next strongest received signal; and
    estimating from the second transmitted signal a second interference signal.

10. The method of claim 7 wherein the first interference signal is estimated by convolving the first estimated transmitted signal with a channel response associated with the MIMO DSL communications system.

11. The method of claim 7 further including generating an error signal by equalizing one or more of the received signals and updating one or more of the N weights using the error signal.

12. The method of claim I wherein the step of combining one or more of the weighted signals includes:

    measuring a channel response from each of the transmitters to each of the receivers;
    feeding the channel response to the transmitter processor;
    calculating an optimal transmit vector to minimize interference between one or more particular transmitters and one or more of the receivers; and
    weighting one or more transmitted signals by the optimal transmit vector.

**13.** An apparatus for reducing crosstalk in a DSL communications system having N transmitters coupled to N receivers, where N is an integer greater than or equal to 1, comprising:

a framer for creating N transmitted signals from one or more data streams;
N transmitters coupled to the framer for transmitting the N transmitted signals;
N receivers coupled to the N transmitters for receiving N received signals corresponding to the N transmitted signals;
a weight generator coupled to one or more of the N receivers for weighting each of the received signals with N weights, one weight for each of the N transmitters, to produce N weighted signals per received signal; and
a combiner coupled the weight generator and one or more of the N receivers for combining one or more of the weighted signals to produce one or more estimated transmitted signals for one or more of the transmitters.

**14.** The apparatus of claim 13 further comprising a de-framer coupled to the N receivers.

**15.** The apparatus of claim 13 wherein one or more of the N receivers includes a successive interference canceller.

**16.** The apparatus of claim 13 wherein one or more of the N receivers includes an equalizer coupled to the combiner and the weight generator.

**17.** The apparatus of claim 16 wherein the equalizer includes one or more linear equalizers.

**18.** The apparatus of claim 13 further comprising one or more channel response estimators coupled between one or more of the N transmitters and a corresponding one or more of the N receivers.

**19.** The apparatus of claim 13 one or more of the receivers includes an echo canceller.

**20.** A method for reducing the effect of crosstalk in a DSL communications system including N transmitters respectively connected to N receivers, where N is an integer greater than or equal to 1, the method comprising:

at any one of the N receivers, receiving a waveform including a number of signals;
weighting each of the received signals with a weight thereby producing a number of weighted signals;
combining one or more of the weighted signals to produce an estimated transmitted signal;
estimating one or more interference signals from the estimated transmitted signal; and
subtracting one or more of the interference signals from the waveform.

FIG. 1

FIG. 2

EP 1 164 758 A2

<u>300</u>

```
┌─────────┐
│  Begin  │
└─────────┘
```

302 ──┐
```
┌──────────────────────────────────┐
│   RECEIVE M RECEIVED SIGNALS     │
│  x₁...xⱼ AT EACH OF N RECEIVERS   │
└──────────────────────────────────┘
```

RECEIVE M RECEIVED SIGNALS $x_1...x_j$ AT EACH OF N RECEIVERS

304 ──┐

WEIGHT EACH SIGNAL $x_i$ WITH j WEIGHTS $w_1... w_j$, TO PRODUCE j WEIGHTED SIGNALS $ws_1... ws_j$

306 ──┐

COMBINE WEIGHTED SIGNALS $ws_1... ws_j$ TO PRODUCE AN ESTIMATED TRANSMIT WAVEFORM $y_1'$

```
┌─────────┐
│   End   │
└─────────┘
```

**FIG. 3**

**FIG. 4**

EP 1 164 758 A2

500

Enter

502 — CALCULATE COMBINING WEIGHT VECTOR FOR THE NEXT STRONGEST $i^{th}$ SIGNAL

504 — ESTIMATE THE $i^{th}$ TRANSMITTED WAVEFORM $\hat{y}_i$

506 — ESTIMATE CHANNEL RESPONSE $h_i$

508 — ESTIMATE THE INTERFERENCE SIGNAL $\hat{i}_i$ FOR THE $i^{th}$ RECEIVED WAVEFORM $x_i$

510 — SUBTRACT ESTIMATED INTERFERENCE SIGNAL $\hat{i}_i$ FROM RECEIVED WAVEFORM VECTOR

LAST SIGNAL?

No

Yes

End

FIG. 5

16

FIG. 6

600

700

731 — WEIGHT GENERATOR → $e_i$

$w_{eq,1}$    $y'$   736   $y'$   $w_{eq,2}$   $y'$   $w_{eq,N}$

$y' \rightarrow$   D   $\cdots$   D

$732_1$   $y'$    $\cdots$    $y'$   $732_N$

$z_1$     $\cdots$     $z_N$

733 — ADDER

$\downarrow y''$

**FIG. 7**

800

801   802   804

$y_i' \rightarrow$ LEQ $\rightarrow +$ ◯ $Y_i'' \rightarrow$ Slicer $\rightarrow R_i$

WG    FB

806

831

**FIG. 8**

FIG. 9

FIG. 10

EP 1 164 758 A2

```
                        ┌──────────┐
                        │  ENTER   │
                        └──────────┘
                              │
                              ▼
              ┌───────────────────────────────┐
              │    MEASURE THE CHANNEL         │
              │    RESPONSE FROM EACH          │
   1102       │  TRANSMITTER TO EACH RECEIVER  │
              └───────────────────────────────┘
                              │
                              ▼
   1104       ┌───────────────────────────────┐
              │   FEED THE CHANNEL RESPONSE TO │
              │         THE TRANSMITTER        │
              └───────────────────────────────┘
                              │
                              ▼
   1106       ┌───────────────────────────────┐
              │     CALCULATE THE OPTIMAL      │
              │  TRANSMIT VECTOR TO MINIMIZE   │
              │    INTERFERENCE TO OTHER       │
              │          RECEIVERS             │
              └───────────────────────────────┘
                              │
                              ▼
   1108       ┌───────────────────────────────┐
              │    WEIGHT EACH TRANSMITTED     │
              │            SIGNAL              │
              │   BY OPTIMAL TRANSMIT VECTOR   │
              └───────────────────────────────┘
                              │
                              ▼
                        ┌──────────┐
                        │   END    │
                        └──────────┘
```

FIG. 11